# EUROPEAN PATENT APPLICATION

(11) **EP 1 839 970 A2**
(43) Date of publication of application: **03.10.2007**
(21) Application number: 07104978.7
(22) Date of filing: 27.03.2007
(51) Int. Cl.: B60S 1/16, B60S 1/06

(54) **Motor with reduction gear**

(30) Priority: 29.03.2006 JP 2006092512
(71) Applicant: Mitsuba Corporation, Kiryu-shi, Gunma 376-8555 (JP)
(72) Inventor: Takada, Sadaki, Kiryu-shi Gunma 376-8555 (JP)
(74) Representative: Vogel, Andreas

(57) **Abstract**

A wiper motor (11) which can prevent an impact force from greatly acting on attaching parts is provided. A gear cover (40) formed in a substantially inverted y-plate shape is fastened to an opening of a gear case (21) of the wiper motor (11) used in a rear wiper device so as to cover a worm reduction gear (22) and a crank device. A gravity center of a motor part and a gear part is disposed within an area of a triangle formed by a first attaching part (41), a second attaching part (42), and a third attaching part (43), which are formed at three end portions of the inverted y-plate shape of the gear cover (40). The first attaching part (41) is disposed on an extension line of the rotation axis (12), and the rotation axis (12) is disposed at a position where a segment connecting the second attaching part (42) and the third attaching part (43) is divided into half. A wiper shaft (31) is disposed on an opposite side to the third attaching part (43) with respect to a segment connecting the first attaching part (41) and the second attaching part (42).

## Description

### TECHNICAL FIELD OF THE INVENTION

The present invention relates to a motor with a reduction gear and more specifically to an attaching structure of the motor with a reduction gear, for example, a technique effectively used in a rear wiper device of an automobile.

### BACKGROUND OF THE INVENTION

The wiper motor used in the rear wiper device of the automobile includes a wiper motor comprising a motor part having an electric motor, a gear part having a reduction gear which is housed in a gear case coupled to the motor part and deaccelerates rotation of a rotation axis of the electric motor to convert the rotation to an oscillating motion and to transmit it to a wiper shaft, and a gear cover covering an opening of the gear case.

When such a wiper motor is attached to a panel of a tailgate of the automobile, attaching parts provided at three positions of the gear cover are fastened to the panel by bolts and nuts. For example, see Japanese Patent Laid-Open Publication No. 11-508850 (Domestic Publication after PCT International Publication).

### SUMMARY OF THE INVENTION

In such a rear wiper device, the three attaching parts of the wiper motor are disposed in the same direction with respect to the electric motor. Therefore, there is such a problem that an impact force due to inertia caused by the wiper motor at a time of opening/closing operations of the tailgate acts greatly on the three attaching parts.

An object of the present invention is to provide a motor with a reduction gear, which can prevent an impact force from acting greatly on some attaching parts.

Representative ones of means for solving the above problems are as follows.
(1) A motor with a reduction gear according to the present invention comprises:
   a motor part having an electric motor;
   a gear part having a reduction gear which is housed in a bottomed gear case coupled to the motor part and deaccelerates rotation of a rotation axis of the electric motor to transmit it to an output shaft; and
   a gear cover covering an opening of the gear case,
   wherein a first attaching part, a second attaching part, and a third attaching part are formed respectively at three positions located in a periphery of the gear cover, and a gravity center of the motor part and the gear part is disposed within an area of a triangle connecting the three attaching parts.
(2) The motor with a reduction gear according to above item (1) is such that the first, second, and third attaching parts are formed in a same plane.
(3) The motor with a reduction gear according to above item (1) or (2) is such that the first attaching part is disposed on an extension line of the rotation axis, and the rotation axis is disposed at a position where a segment connecting the second attaching part and the third attaching part is divided into half.
(4) The motor with a reduction gear according to above item (1), (2), or (3) is such that the output shaft is inserted into an insertion hole formed in an object to be attached to the motor with a reduction gear and is supported by an elastic member fitted to the insertion hole.
(5) The motor with a reduction gear according to above item (1), (2), (3), or (4) is such that the output shaft is disposed on an opposite side to the third attaching part with respect to a segment connecting the first attaching part and the second attaching part.

According to above item (1), respective distances from the gravity center to the three attaching parts are substantially equal. In order that a balance of stresses acting on the motor with a reduction gear is made better, for example, the impact force caused by the inertia of the motor with a reduction gear at a time of the opening/closing operations of the tailgate can be prevented from greatly acting on the three attaching parts. Therefore, an attaching strength of the motor with a reduction gear to the vehicle body can be enhanced and accordingly noise during an operation of the motor with a reduction gear can be reduced.

Further, it is possible to prevent an occurrence of noise caused by the three attaching parts and their peripheries due to repeat actions of the impact force by the inertia of the motor with a reduction gear.

According to above item (2), since the gear cover can be formed in a flat plate shape, pressing can be facilitated. Concurrently, for example, since the attaching directions to the vehicle body are the same, assembling work can be simplified.

According to above item (3), since a balance of disposing the three attaching parts becomes better, a balance of the motor with a reduction gear can be much further improved.

According to above item (4), since the output shaft is also supported by an object to be attached, an attaching strength can be improved in comparison with the case where the motor with a reduction gear is supported at the object to be attached by the three attaching parts.

According to above item (5), for example, when the motor with a reduction gear is used as a wiper motor of a rear wiper device, the wiper motor can be installed in a state where the output shaft is inserted into the insertion hole formed in the rear windshield glass. Therefore, the degree of freedom of the layout of the rear wiper device can be increased.

### BRIEF DESCRIPTION OF THE DRAWINGS

FIG. 1 is a perspective view showing a wiper motor according to an embodiment of the present invention;
FIG. 2 is a rear view thereof;
FIG. 3 is a rear view showing a state that a gear cover is removed;
FIG. 4 is a partially broken side view showing an attaching state of the wiper motor to a tailgate; and
FIG. 5 is a perspective view showing a wiper motor according to a second embodiment of the present invention.

### DESCRIPTION OF THE PREFERRED EMBODIMENTS

Hereinafter, embodiments of the present invention will be described based on the accompanying drawings.

In the present embodiment, a motor with a reduction gear according to the present invention is constructed as a wiper motor used in a rear wiper device.

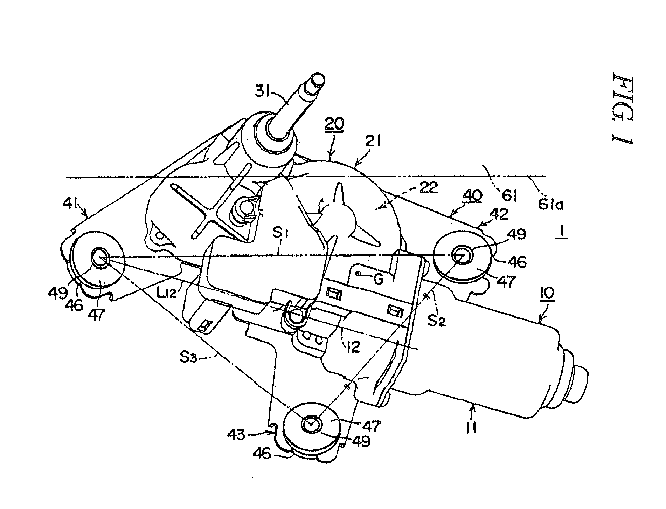

As shown in FIG. 1, a wiper motor 1 includes a motor part 10 having an electric motor 11, and a gear part 20 having a worm reduction gear 22 as a reduction gear. The motor part 10 and the gear part 20 are adjacently disposed and are fastened by bolts.

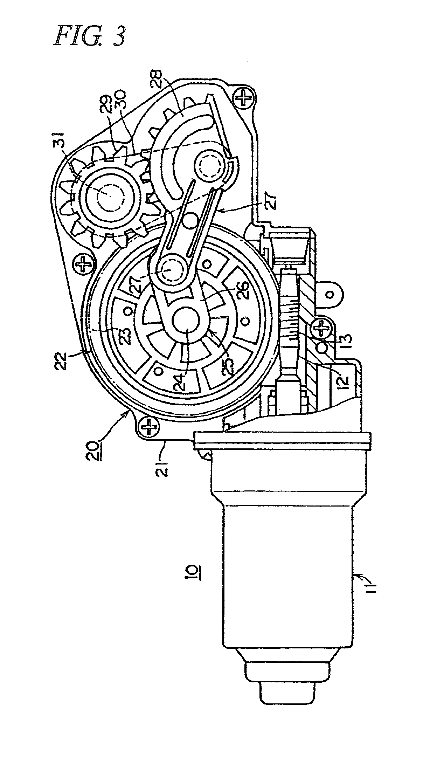

As shown in FIG. 3, a rotation axis (armature shaft) of the electric motor 11 is inserted into a gear case 21 having a bottom portion of the gear part 20 to be rotatably bridged therebetween. A worm 13 is formed on a middle portion of a rotation axis 12.

A worm wheel 23 of the worm reduction gear 22 is engaged with the worm 13. The worm wheel 23 is almost disposed in the same plane as that of the rotation axis 12.

A wheel shaft 24 as an output shaft of the worm reduction gear 22 is fixed on a center line of the worm wheel 23. The wheel shaft 24 is disposed in a plane orthogonal to the rotation axis 12 to be rotatably supported by the gear case 21.

The worm 13 and the worm wheel 23 are set to sufficiently deaccelerate rotation of the rotation axis 12 and transmit it to the wheel shaft 24.

To the wiper motor 1 for the rear wiper device according to the present embodiment, a crank device 25 converting rotation deaccelerated by the worm reduction gear 22 to an oscillating motion (reciprocating rotation motion of 360 degrees or below) is coupled.

That is, one end portion of a crank 26 is orthogonally fixed to the wheel shaft 24 of the worm wheel 23. One end portion of a connecting rod 27 is rotatably coupled to a free end portion of the crank 26. A sector gear 28 is formed at the other end portion of the connecting rod 27, and an output gear 29 is engaged with the sector gear 28. The output gear 29 is orthogonally fixed to a wiper shaft 31 rotatably supported by the gear case 21 outside the worm wheel 23. An oscillating plate 30 is bridged between the wiper shaft 31 and a rotation axis of the sector gear 28. The oscillating plate 30 is rotatably supported by the wiper shaft 31 and the rotation axis of the sector gear 28.

When the crank 26 rotates 180 degrees about the wheel shaft 24, the sector gear 28 moves forward up to a predetermined angle. When the crank 26 rotates the remaining 180 degrees thereabout, the sector gear 28 is inverted to move backward up to the predetermined angle. Therefore, the wiper shaft 31 as a final output shaft results from performing an oscillating motion only at the predetermined angle.

Namely, the motor with a reduction gear according to the present invention is configured to be able to transmit a rotating force of the rotation axis 12 to the wiper shaft 31.

The gear case 21 is molded integrally in a housing case shape, whose one end is opened, by an aluminum die cast method using aluminum. One end portion of the wiper shaft 31 passes through a closed wall of the gear case 21 and protrudes outside.

A protruding end portion of the wiper shaft 31 is configured so as to support fixedly a base end portion of a wiper arm. A wiper blade for wiping a rear windshield glass is attached to a free end portion of the wiper arm.

A gear cover 40 covers an opening of the gear case 21 so as to cover the worm reduction gear 22 and the crank device 25 in the gear case, and is fastened to the gear case by bolts.

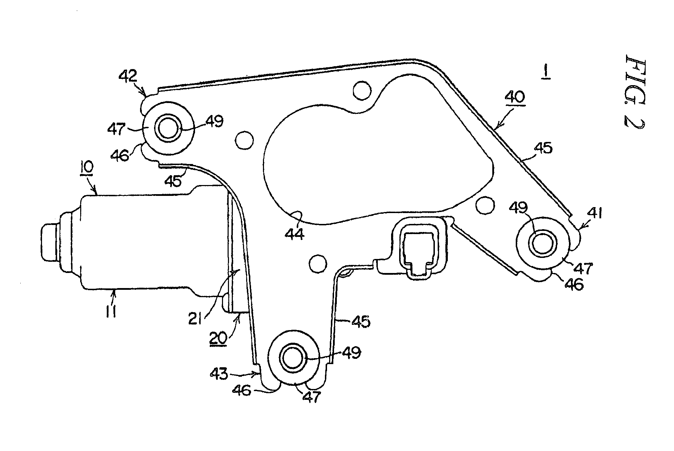

As shown in FIG. 2, the gear cover 40 is formed in a substantially inverted y-plate shape by pressing using an iron plate when viewed from a plane.

A first attaching part 41, a second attaching part 42, and a third attaching part 43 are formed at three end portions of the inverted y-plate shape of the gear cover 40, respectively.

Since the first, second, and third attaching parts are arranged at the three end portions of the inverted y-plate shape of the gear cover 40, as shown in FIG. 1, three segments S1, S2, and S3, i.e., S1 connecting the first attaching part 41 and the second attaching part 42, S2 connecting the second attaching part 42 and the third attaching part 43, and S3 connecting the third attaching part 43 and the first attaching part 41, form a triangle.

A relation among the gear cover 40, the motor part 10, and the gear part 20 is designed so that a gravity center G of the motor part 10 and the gear part 20 is within an area of the triangle formed by the first attaching part 41, the second attaching part 42, and the third attaching part 43.

Incidentally, the gravity center G in the present invention has been described based on a position as viewed from a direction parallel to an axis line of the wiper shaft, that is, on the case of being viewed from a plane.

A direction in which the gravity center G acts on the attaching parts at a time of a closing operation of the tailgate is directed in an opposite direction to a tip of the wiper shaft 31. However, respective distances from the gravity center G to the first attaching part 41, the second attaching part 42, and the third attaching part 43 are substantially equal to each other. Therefore, the impact force acting on respective attaching legs can be suppressed.

As shown in FIGS. 1 and 2, since the gear cover 40 is formed in a flat plate shape, the first attaching part 41, the second attaching part 42, and the third attaching part 43 are arranged in the same plane.

As shown in FIG. 2, a cloud-shaped dent 44 is swell-formed at a center portion of the gear cover 40 so as to be dented toward a side of the gear case 41. Ribs 45 are bent and formed at edge side portions of the gear cover 40 so as to protrude toward an opposite side to the gear case 41. The dent 44 and the ribs 45 can be simultaneously molded in pressing the gear cover 40.

As referred to by a dash-single line L₁₂ of FIG. 1, the first attaching part 41 is disposed on an extension line (L₁₂) of the rotation axis 12.

As shown in FIG. 1, the rotation axis 12 (see the dash-single line L₁₂) is arranged at a position where the segment S2 connecting the second attaching part 42 and the third attaching part 43 is divided into half.

Further, the wiper shaft 31 is disposed on an opposite side to the third attaching part 43 with respect to the segment S1 connecting the first attaching part 41 and the second attaching part 42, and is disposed on a vertical line extending from a substantially middle position of the segment S1 toward a direction opposite to the third attaching part 43.

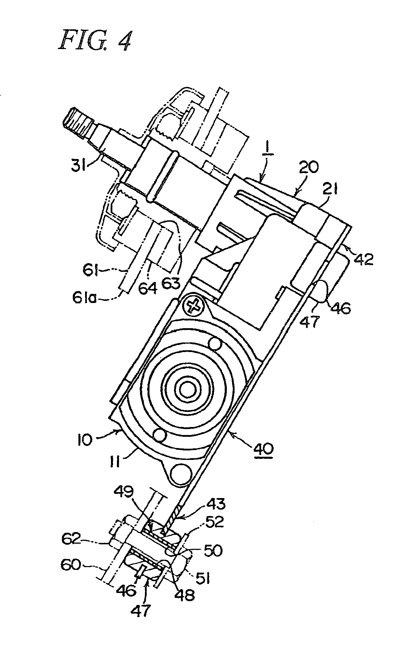

The first attaching part 41, the second attaching part 42, and the third attaching part 43 have substantially the same structure. Therefore, the structure of the third attaching part 43 will be described as a representative example with reference to FIG. 4.

As shown in FIG. 4, the third attaching part 43 has a notch part 46.

A molding material having a resilient force of a rubber or resin is used for the notch part 46. A mount rubber 47 molded in a substantially cylindrical shape is fitted to the notch part 46. A cylindrical-shaped collar 49 obtained by rounding a metal plate is inserted into an insertion hole 48 of the mount rubber 47.

A bolt 51 is inserted into an insertion hole 50 of the collar 49 through a washer 52 (see both shown by imaginary lines of FIG. 4).

At this time, respective directions of inserting the bolts 51 into the first attaching part 43, the second attaching part 44, and the third attaching part 45 are parallel with an axial direction of the wiper shaft 31. Further, the gear cover 40 is disposed to be vertical to the inserting directions of the respective bolts and the axial direction of the wiper shaft. Accordingly, when the wiper motor is operated, a bending stress etc. is hard to act on the first attaching part, the second attaching part, and the third attaching part.

The thus-structured wiper motor 1 is supplied from a wiper motor manufacturer to an automobile manufacturer.

In the automobile manufacturer, the wiper motor 1 is arranged near a rear windshield glass 61 (see FIG. 4) of a panel 60 of the tailgate. Concurrently, as referred to by the imaginary lines in FIG. 4, the bolts 51 inserted into the three attaching parts 41, 42, and 43 of the gear cover 40 are screwed into nuts 62 previously fixed to the panel 60.

At this time, as shown by the imaginary lines of FIG. 1, the wiper motor 1 is disposed at the panel 60 of the tailgate so that the segment S1 connecting the first attaching part 41 and the second attaching part 42 is close to and parallel with an outer edge side 61a of the rear windshield glass 61. Concurrently, as shown in FIG. 4, the wiper shaft 31 is inserted into an insertion hole 64 provided in the rear windshield glass 61 and is fixed by a grommet 64 as an elastic member.

By doing so, the rear wiper device can be installed on the rear windshield glass 61 with satisfactory layout performance.

Incidentally, in the wiper motor 1 in which the three attaching parts 41, 42, and 43 of the gear cover 40 are fastened by the bolts 51 and the nuts 62 via the mount rubbers 47, the three mount rubbers 47 prevent an occurrence of a phenomenon in which vibration caused by operating the electric motor 11 is transmitted to a side of the panel 60. Therefore, an occurrence of noise can be prevented.

According to the above embodiments, the following effects can be obtained.
1) The distances from the gravity center to the three attaching parts are substantially equal to each other. Therefore, in order to improve a balance of stresses acting on the wiper motor, for example, the impact force caused by the inertia of the wiper motor at the time of the opening/closing operations of the tailgate can be prevented from greatly acting on the three attaching parts. Consequently, an attaching strength of the wiper motor to the tailgate can be enhanced and accordingly noise during the operation of the wiper motor can be reduced.
2) It is possible to prevent an occurrence of noise caused by the three attaching parts and their peripheries due to repeat actions of the impact force by the inertia of the wiper motor.
3) Since the gear cover is formed in a flat plate shape, a process by pressing etc. can be facilitated. Concurrently, since the attaching directions to the tailgate are the same, assembling work can be simplified.
4) The first attaching part is disposed on the extension line of the rotation axis, and the rotation axis is disposed at the position where the segment connecting the first attaching part and the second attaching part is divided into half. Therefore, since a layout balance of the three attaching parts becomes better, the balance of the wiper motor can be much further improved.
5) The wiper shaft is inserted into the insertion hole formed in the rear windshield glass and is supported by the grommet fitted to the insertion hole. Therefore, since the wiper shaft is also supported on the rear windshield glass via the grommet, the attaching strength can be improved in comparison with the case where the wiper motor is supported on the tailgate by the three attaching parts.
6) The wiper shaft is disposed on the opposite side to the third attaching part with respect to the segment connecting the first attaching part and the second attaching part. Therefore, since the wiper motor can be installed in a state where the wiper shaft is inserted into the insertion hole formed in the rear windshield glass, a degree of freedom of layout of the rear wiper device can be increased.

Incidentally, needless to say, the present invention is not limited to the above embodiments and can be variously modified and varied within the scope of not departing from the gist thereof.

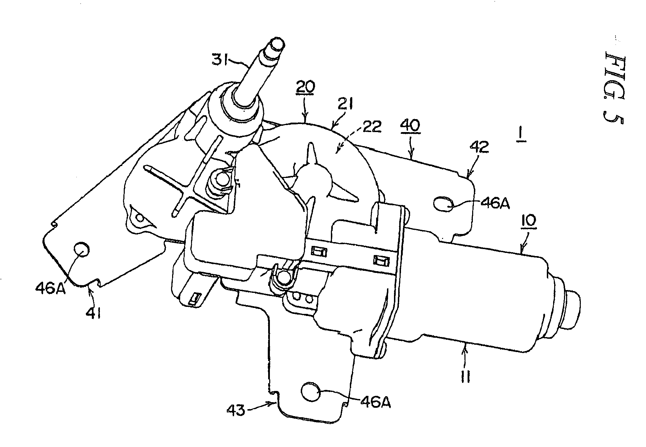

For example, as shown in FIG. 5, the notch parts 46 of the three attaching parts may be replaced with attaching holes 46A.

In this case, the panel of the tailgate etc. can be directly attached to the vehicle body without using the mount rubbers.

The reduction gear for deaccelerating the rotation of the electric motor is not limited to the use of the worm reduction gear and may use a planetary reduction gear.

A motion converting device coupled to the reduction gear to convert the deaccelerated rotation to the oscillating motion is not limited to the use of the crank device and may be omitted.

Also, the wiper shaft may be inserted into the insertion hole formed in the vehicle body and be supported by the grommet fitted to the insertion hole.

In the above embodiments, the wiper motor for the rear wiper device has been described. However, the present invention is not limited to this and can be applied to motors with a reduction gear, which are generally used in a power window device and a power seat device, etc. in addition to a front wiper device.

## Claims

1. A motor with a reduction gear, the motor comprising:
a motor part having an electric motor;
a gear part having a reduction gear which is housed in a bottomed gear case coupled to the motor part and deaccelerates rotation of a rotation axis of the electric motor to transmit it to an output shaft; and
a gear cover covering an opening of the gear case,
wherein a first attaching part, a second attaching part, and a third attaching part are formed respectively at three positions located in a periphery of the gear cover, and a gravity center of the motor part and the gear part is disposed within an area of a triangle connecting the three attaching parts.

2. The motor with a reduction gear according to claim 1, wherein the first, second, and third attaching parts are formed in a same plane.

3. The motor with a reduction gear according to claim 1 or 2, wherein the first attaching part is disposed on an extension line of the rotation axis, and the rotation axis is disposed at a position where a segment connecting the second attaching part and the third attaching part is divided into half.

4. The motor with a reduction gear according to any one of claims 1 to 3, wherein the output shaft is inserted into an insertion hole formed in an object to be attached to the motor with a reduction gear and is supported by an elastic member fitted to the insertion hole.

5. The motor with a reduction gear according to any one of claims 1 to 4, wherein the output shaft is disposed on an opposite side to the third attaching part with respect to a segment connecting the first attaching part and the second attaching part.
